# EUROPEAN PATENT APPLICATION

(11) **EP 4 704 463 A1**
(43) Date of publication of application: **04.03.2026**
(21) Application number: 25198711.1
(22) Date of filing: 28.08.2025
(51) Int. Cl.: H04W 36/02, H04W 84/12

(54) **ACCESS POINT MULTI-LINK DEVICE AND METHOD FOR TRANSMISSION WINDOW CONTROL DURING ROAMING**

(30) Priority: 03.09.2024 US 202463689905 P; 14.08.2025 US 202519299352
(71) Applicant: MEDIATEK INC., Hsinchu City 30078 (TW)
(72) Inventor: PENG, Yang-Hung, 30078 Hsinchu City (TW); HSU, Chien-Fang, 30078 Hsinchu City (TW)
(74) Representative: Hoefer & Partner Patentanwälte mbB

(57) **Abstract**

A method and apparatus for coordinating downlink transmission during a wireless roaming process are disclosed. A first access point multi-link device, AP MLD, (10) performs frame exchanges with a non-AP MLD (30). During a roaming process where the non-AP MLD (30) transitions to a second AP MLD (20), the first AP MLD (10) transmits first information indicative of sequence number, SN, limitation to the second AP MLD (20). In response, the second AP MLD (20) controls its downlink transmission based on the first information. The control is performed to ensure that MAC Protocol Data Units, MPDUs, transmitted from the second AP MLD (20) to the non-AP MLD (30) are within a reordering buffer window of the non-AP MLD (30), thereby preventing data loss and increasing communication reliability.

## Description

### CROSS REFERENCE TO RELATED APPLICATIONS

This application claims the benefit of U.S. Provisional Application No. 63/689,905, filed on September 3rd, 2024. The content of the application is incorporated herein by reference.

### BACKGROUND

In modern wireless local area networks (WLANs), standards such as IEEE 802.11bn define multi-access point (multi-AP) systems to facilitate seamless roaming for non-AP devices. During a roaming process, a non-access point multi-link device (non-AP MLD) may be concurrently connected to a current AP MLD and a target AP MLD, resulting in parallel downlink transmissions from both access points.

Conventionally, data packets (MPDUs) for a single traffic stream share a common sequence number (SN) space and are reordered at the non-AP MLD using a reordering buffer, wherein a reordering window of the non-AP MLD moves forward dynamically as the MPDUs are received. It is noted that the MPDUs with SNs outside (before) the current reordering buffer window are discarded. However, in a parallel transmission scenario, the target AP MLD transmits newer MPDUs with higher SNs. The reception of these higher-SN MPDUs may cause the reordering buffer window at the non-AP MLD to advance prematurely. At the AP MLD, a Block Acknowledgement (BA) window is used to project the reordering buffer window of the non-AP MLD, wherein the BA window of the AP MLD and the reordering buffer window of the non-AP MLD are moved forward synchronously, and the size of BA window and the reordering buffer window is the same. That is, the BA window at the transmitter (TX) and the reordering buffer window at the receiver (RX) are synchronized.

However, the uncoordinated window advancement may cause the SNs of older MPDUs, still queued at the current AP MLD, to fall outside (specifically, before) the valid range of the window. Consequently, even if these older MPDUs are successfully transmitted, they are discarded by the non-AP MLD. This leads to significant data loss and reduced reliability, which is contrary to the goals of an ultra-high reliability (UHR) system.

### SUMMARY

A wireless communication method performed by a first access point multi-link device, a first access point multi-link device, a wireless communication method performed by a second access point multi-link device, and a second access point multi-link device according to the invention are defined in the independent claims. The dependent claims define preferred embodiments thereof. In an embodiment, a wireless communication method performed by a first access point multi-link device (AP MLD) is disclosed. The wireless communication method includes performing frame exchanges (i.e., data transmission) with a non-access point multi-link device (non-AP MLD); and during a roaming process in which the non-AP MLD transitions from the first AP MLD to a second AP MLD, transmitting first information indicative of sequence number (SN) limitation to the second AP MLD, to limit the second AP MLD from exceeding a reordering buffer window of the non-AP MLD during downlink transmission to the non-AP MLD.

In another embodiment, a wireless communication method performed by a second access point multi-link device (AP MLD) is disclosed. The wireless communication method includes receiving first information indicative of sequence number (SN) limitation from a first AP MLD during a roaming process in which a non-access point multi-link device (non-AP MLD) transitions from the first AP MLD to a second AP MLD; and controlling downlink transmission to the non-AP MLD based on the first information, to ensure that MAC Protocol Data Units (MPDUs) transmitted to the non-AP MLD are within a reordering buffer window of the non-AP MLD.

In another embodiment, a first access point multi-link device (AP MLD) is disclosed. The first AP MLD includes a transceiver and a processor coupled to the transceiver. Optionally, the first AP MLD further includes a memory configured to buffer a transmission queue, and the processor is also coupled to the memory. The processor is configured to perform frame exchanges with a non-access point multi-link device (non-AP MLD); and during a roaming process in which the non-AP MLD transitions from the first AP MLD to a second AP MLD, transmit first information indicative of sequence number (SN) limitation to the second AP MLD via the transceiver, to limit the second AP MLD from exceeding a reordering buffer window of the non-AP MLD during downlink transmission to the non-AP MLD.

In another embodiment, a second access point multi-link device (AP MLD) is disclosed. The second AP MLD includes a transceiver and a processor coupled to the transceiver. Optionally, the second AP MLD further includes a memory configured to buffer a transmission queue, and the processor is also coupled to the memory. The processor is configured to receive first information indicative of sequence number (SN) limitation from a first AP MLD via the transceiver during a roaming process in which a non-access point multi-link device (non-AP MLD) transitions from the first AP MLD to the second AP MLD; and control downlink transmission to the non-AP MLD based on the first information, to ensure that MAC Protocol Data Units (MPDUs) transmitted to the non-AP MLD are within a reordering buffer window of the non-AP MLD.

The present disclosure provides a method and apparatus for transmission window control during a multi-AP MLD system's roaming process. By coordinating SN limitation information between a first AP MLD and a second AP MLD, the premature advancement of a transmission window is prevented, which avoids the erroneous discarding of older data packets from the current AP MLD. Consequently, the disclosure significantly reduces data loss, increases communication reliability, and improves spectrum efficiency, thereby supporting the ultra-high reliability (UHR) goals of modern WLAN systems.

These and other objectives of the present disclosure will no doubt become obvious to those of ordinary skill in the art after reading the following detailed description of the preferred embodiment that is illustrated in the various figures and drawings.

### BRIEF DESCRIPTION OF THE DRAWINGS

FIG.1 is a schematic diagram of a wireless communication system in an initial state of a roaming process according to an embodiment of the present disclosure.
FIG.2 is a schematic diagram illustrating a limitation cancellation mechanism of the wireless communication system in FIG. 1.
FIG.3A is a schematic diagram illustrating a first stage of a dynamic update mechanism of the wireless communication system in FIG. 1.
FIG.3B is a schematic diagram illustrating a second, subsequent stage of the dynamic update mechanism of the wireless communication system in FIG. 1.
FIG.4 is a schematic diagram illustrating a pause limitation mechanism of the wireless communication system in FIG.1.
FIG.5 is a schematic diagram illustrating a permissive packet drop policy of the wireless communication system in FIG. 1.
FIG.6 is a schematic diagram illustrating a first scenario of a request mechanism within the wireless communication system in FIG. 1.
FIG.7 is a schematic diagram illustrating a second, anticipatory scenario of the request mechanism within the wireless communication system in FIG. 1.
FIG.8 is a flowchart illustrating a method for establishing a transmission limitation performed by a first access point multi-link device (AP MLD) of the wireless communication system in FIG. 1.
FIG.9 is a flowchart illustrating a method for canceling a transmission limitation performed by the first AP MLD of the wireless communication system in FIG. 1.
FIG.10 is a flowchart illustrating a method for controlling transmission based on received limitation information performed by a second AP MLD of the wireless communication system in FIG. 1.

### DETAILED DESCRIPTION

The present disclosure provides a method and apparatus for coordinating parallel downlink transmissions during a non-AP MLD's roaming process in a multi-AP (MAP) WLAN system. The coordination is initiated by a first (current) access point multi-link device (AP MLD), which determines the information indicative of a sequence number (SN) limitation to limit/manage/control downlink transmission from a second (target) AP MLD, therefore, downlink transmission from the second AP MLD to the non-AP MLD is limited not to exceed a reordering buffer window of the non-AP MLD, i.e., ensuring that MAC Protocol Data Units (MPDUs) transmitted to the non-AP MLD are within the reordering buffer window of the non-AP MLD. It is noted that the BA window at the AP MLD moves/slides forward as MPDUs are transmitted, and the reordering buffer window at the non-AP MLD moves/slides forward as MPDUs are received. At the AP MLD, a Block Acknowledgement (BA) window is used to project the reordering buffer window of the non-AP MLD (For example, ideally, the sequence number space of both windows is the same), wherein the BA window of the AP MLD and the reordering buffer window of the non-AP MLD are moved forward synchronously, and the size of BA window and the reordering buffer window is the same (collectively referred to as a window size). That is, the BA window at the transmitter side (such as, the first/second AP MLD) and the reordering buffer window at the receiver side (such as, the non-AP MLD) are synchronized. That is, the downlink transmission from the second AP MLD to the non-AP MLD is limited not to exceed the reordering buffer window of the non-AP MLD, which is equivalent to saying that the downlink transmission from the second AP MLD to the non-AP MLD is limited not to exceed the BA window of the AP MLD, i.e., ensuring that MPDUs transmitted from the second AP MLD to the non-AP MLD are within the BA window maintained by the AP MLD. In the embodiment, the information indicative of the SN limitation is at least based on a starting sequence number (SN) of at least one MAC Protocol Data Unit (MPDU) in the first AP MLD's transmission queue or a starting sequence number (SN) of a Block Ack (BA) window. Optionally, the information indicative of the SN limitation can also further based on a size of a transmission window (for example, BA window). It should be noted that the size of the transmission window can be known by the first AP MLD and the second AP MLD, and the size of the BA window may be equal to the size of the reordering buffer window. In the embodiment, the first AP MLD transmits information indicative of SN limitation to the second AP MLD during a roaming process in which the non-AP MLD transitions from the first AP MLD to a second AP MLD, to limit the second AP MLD from exceeding the reordering buffer window of the non-AP MLD during downlink transmission to the non-AP MLD. It should be noted that the BA window and the reordering buffer window can be understood as the same window-sometimes also described as the transmission window-but with different names and functions on the transmitter (TX) and receiver (RX) sides, respectively. Both windows slide forward synchronously as data (MPDU) is successfully received. Hence, limiting/restricting the second AP MLD from exceeding the reordering buffer window of the non-AP MLD is equivalent to limiting/restricting the second AP MLD from exceeding the BA window of the first AP MLD.

The effect of this coordination is to prevent premature advancement of transmission window (e.g., the BA window), thereby avoiding the erroneous discarding of older MAC Protocol Data Units (MPDUs) from the first AP MLD. As a result, the disclosure reduces data loss, increases communication reliability during the roaming transition, and improves spectrum efficiency. The disclosed mechanism is also adaptable, supporting dynamic updates and proactive requests from the second AP MLD to satisfy Quality of Service (QoS) requirements. These features provide a robust solution that supports the ultra-high reliability (UHR) objectives of modern WLAN systems.

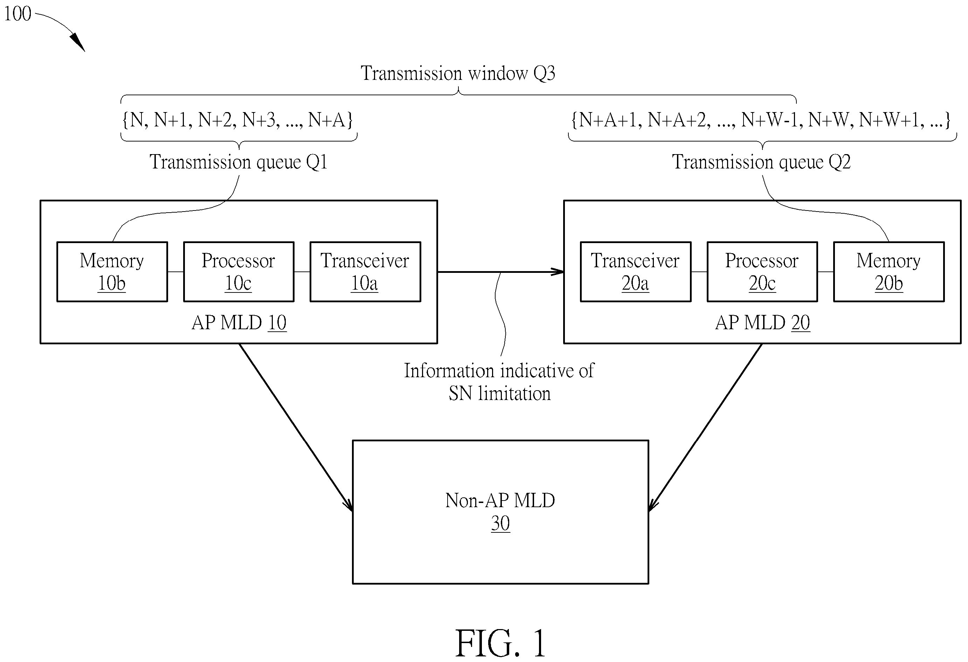

FIG.1 is a schematic diagram of a wireless communication system 100 in an initial state of a roaming process according to an embodiment of the present disclosure. The wireless communication system 100 includes a first AP MLD 10, a second AP MLD 20, and a non-AP MLD 30. The first AP MLD 10 and the second AP MLD 20 operate within a coordinated network, such as a seamless mobility domain (SMD) which can facilitate seamless roaming of the non-AP MLD 30 in the mobility domain that consists of multiple AP MLDs.

The first AP MLD 10 may be a current AP MLD to which the non-AP MLD 30 is connected (or with which it performs data transmission) before roaming. The first AP MLD 10 may include a transceiver 10a, a memory 10b, and a processor 10c. The processor 10c may be coupled to the transceiver 10a and the memory 10b to control the operations of the first AP MLD 10. The memory 10b is configured to store data, such as buffer a transmission queue Q1. As depicted in FIG. 1, the transmission queue Q1 includes a plurality of older data packets (i.e., MPDUs) having sequential sequence numbers (SNs) beginning from a starting SN of N, such as {N, N+1, N+2, N+3, ..., N+A}. Preferably, the value N+A represents the sequence number of the last data packet in the transmission queue Q1. Accordingly, in the exemplary embodiment of the present disclosure, the total number of data packets, or the size of the transmission queue Q1, is A+1.

The second AP MLD 20 may be a target AP MLD to which the non-AP MLD 30 needs to be transitioned. The second AP MLD 20 may include a transceiver 20a, a memory 20b, and a processor 20c. The processor 20c may be coupled to the transceiver 20a and the memory 20b. After a network data path switch (that is, the data path from a distribution system (DS) to the first AP MLD 10 is switched to the data path from the DS to the second AP MLD 20), the memory 20b of the second AP MLD 20 may buffer a transmission queue Q2 that may include a plurality of newer data packets having SNs larger than those in the transmission queue Q1, such as {N+A+1, ...}.

The non-AP MLD 30 is a station device configured to receive downlink transmissions from the first AP MLD 10 and the second AP MLD 20. The AP MLD side (e.g., the first/second AP MLD 10/20, i.e., the transmitter of downlink transmission) maintains its transmission window Q3 (such as, the BA window), and the non-AP MLD 30 (i.e., the receiver of downlink transmission) maintains its reordering buffer window for reordering received data packets. The transmission window Q3, which may be a Block Acknowledgement (BA) window, has a predefined window size of W. In the example shown in FIG. 1, the transmission window Q3 can cover an SN range from N to N+W-1. It is noted that the size of the reordering buffer window of the non-AP MLD 30 is equal to the size of the BA window of the first AP MLD 10, for example, both have a size of W, and the starting SN of the BA window is the same with the starting SN of the reordering buffer window. In the embodiment, the starting SN of at least one MAC Protocol Data Unit (MPDU) in a transmission queue of the first AP MLD is also the same with the starting SN of the reordering buffer BA window. It can be understood that the BA window and the reordering buffer window specific/define the same range of sequence numbers.

Preferably, according to the invention, the coordination mechanism is initiated in response to a roaming request. The roaming request may be a standardized message, such as the ST execution request transmitted by the non-AP MLD 30 to signal its intent to perform an SMD BSS (seamless mobility domain basic service set) transition. Upon receiving the roaming request, a comprehensive coordination process may be triggered. The first AP MLD 10 may first determine information indicative of SN limitation based on its transmission queue status (specifically, a starting SN of at least one MPDU in the transmission queue of the first AP MLD 10) or a starting SN of the BA window. The first AP MLD 10 then transmits the information indicative of SN limitation to the second AP MLD 20, which controls the AP MLD 20 to perform downlink transmission with the SN limitation according to the information. The information indicative of SN limitation can be dynamically updated and may be explicitly canceled if the first AP MLD 10 no longer needs to perform downlink transmission to the non-AP MLD 30 (for example, after finishing/completing all MPDUs in its transmission queue).

It should be noted that the roaming request that triggers the method can be received by different entities in different embodiments. For example, a seamless mobility domain basic service set (SMD BSS) transition (ST)may be initiated by the non-AP MLD 30 transmitting an ST execution request, which is functionally equivalent to the roaming request. In one scenario, the non-AP MLD 30 may transmit the roaming request (such as, the ST execution request) to its current AP MLD (the first AP MLD 10). Alternatively, the non-AP MLD 30 may transmit the roaming request (such as, the ST execution request) directly to the target AP MLD (the second AP MLD 20). The coordination mechanism of the present disclosure is applicable in both scenarios, as the first AP MLD 10 becomes aware of the roaming process and initiates the transmission of the information indicative of SN limitation to the second AP MLD 20 regardless of which AP MLD initially receives the request. For ease of description and understanding, the following embodiments are described by taking the first AP MLD 10 receiving a roaming request as an example, but the present disclosure is not limited thereto.

In the embodiments, the transmission window Q3 may be regarded as a reordering buffer window, wherein the reordering buffer window and the BA window have the same SN range and the same window size (labelled as W). This enables that the state of the BA window/ transmission queue Q1 (such as, the starting SN/offset) is used to manage the boundary of the reordering buffer window. Therefore, in the present disclosure, the terms BA window and reordering buffer window may be used interchangeably to refer to the acknowledgement and reordering at the non-AP MLD 30.

Initially, before the non-AP MLD 30 sends a roaming request, data transmission may be performed between the first AP MLD 10 and the non-AP MLD 30, that is, the processor 10c of the first AP MLD 10 is configured to perform frame exchanges with the non-AP MLD 30 via the transceiver 10a. Next, as shown in FIG. 1, during a roaming process in which the non-AP MLD 30 transitions from the first AP MLD 10 to the second AP MLD 20, the processor 10c is further configured to transmit first information indicative of sequence number (SN) limitation to the second AP MLD 20. The purpose of transmitting the first information is to limit the second AP MLD 20 from exceeding the reordering buffer window of the non-AP MLD 30 during downlink transmission to the non-AP MLD 30, i.e., enabling the second AP MLD 20 to perform downlink transmission with the SN limitation.

The first information indicative of SN limitation may be implemented in various ways. In summary, the information indicative of SN limitation is related to a starting SN, and enables the second AP MLD 20 to determine the boundary (SN limitation value) of the window (such as the BA window) based on this information, so as to ensure that all transmitted MPDUs fall within the current window (i.e., not exceed/outside the BA window). For example, but not limited thereto, in a first exemplary embodiment, the first information may include the starting SN (for example, the starting SN=N) of the transmission queue Q1/BA window. In this case, the second AP MLD 20 is configured to derive a first SN limitation value based on the received starting SN and the known window size W. In a second exemplary embodiment, the first information may include a calculated SN limitation value, SN', which is determined by the first AP MLD 10 based on the starting SN and the window size W. In this case, the SN' may be determined as the first SN limitation value within the BA window, for example, SN' = N+W-1.

It should be understood that the starting SN (e.g., N) serves as the core parameter for the coordination mechanism. Preferably, according to the invention, the first information indicative of SN limitation transmitted by the first AP MLD 10 may comprise the starting SN (e.g., N) itself, allowing the second AP MLD 20 to derive the final SN limitation value. Various exemplary embodiments of the present disclosure are based on this core parameter. For example, in an embodiment, the SN limitation value may be calculated as a function of the starting SN and a window size (e.g., N+W-1) to prevent any packet loss. In a priority-mode embodiment, the SN limitation value may be calculated as a function of the starting SN and a queue size (e.g., N+A) to pause the second AP MLD 20's downlink transmission. These different embodiments all rely on the starting SN as the fundamental basis for the coordination, demonstrating the flexibility and broad applicability of the present disclosure. In summary, in the embodiment of the present disclosure, the information indicative of SN limitation is or may be determined based on at least a starting SN of at least one MPDU in the transmission queue of the first AP MLD 10; alternatively or additionally, the first information is determined based on at least a starting SN of the BA window.

The following detailed descriptions of embodiments, which are provided with reference to the drawings, are intended to be illustrative and not limiting. These exemplary embodiments are provided to enable a person of ordinary skill in the art to more effectively understand and practice the core concepts of the present disclosure. It should be understood that the disclosure is not limited to these specific examples.

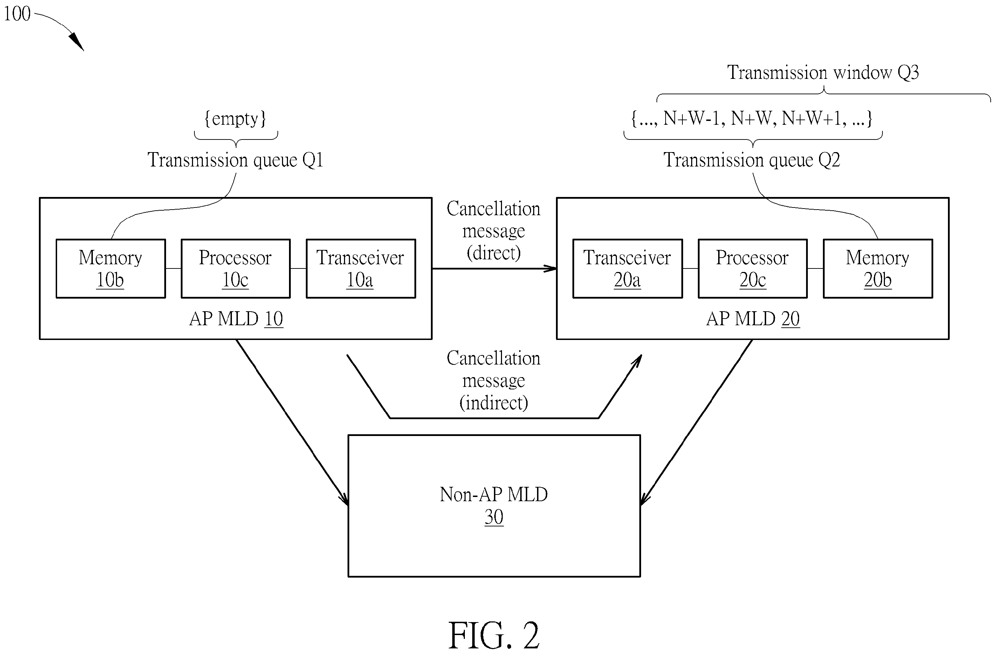

FIG.2 is a schematic diagram illustrating a limitation cancellation mechanism of the wireless communication system 100. FIG.2 depicts an operational state subsequent to the initial state shown in FIG. 1, for example, the first AP MLD 10 has completed its downlink transmission to the non-AP MLD 30. The components of the wireless communication system 100, including the first AP MLD 10, the second AP MLD 20, and the non-AP MLD 30, are as previously described in FIG.1.

As illustrated in FIG.2, the transmission queue Q1 within the memory 10b of the first AP MLD 10 is now empty. The empty state of the transmission queue Q1 indicates that all older data packets have been successfully transmitted to the non-AP MLD 30 or have been dropped, i.e., the first AP MLD 10 does not need to perform downlink transmission to the non-AP MLD 30. This state serves as a trigger for the first AP MLD 10 to initiate a cancellation of the previously established SN limitation.

In response to determining that the transmission queue Q1 is empty, the processor 10c of the first AP MLD 10 is configured to transmit a cancellation message to the second AP MLD 20 via a direct/indirect path. The purpose of the cancellation message is to inform the second AP MLD 20 that the SN limitation is no longer in effect, and the second AP MLD 20 can perform downlink transmission (transmit subsequent MPDUs) independently without being limited by the information indicative of SN limitation or the first AP MLD. As shown in FIG.2, the cancellation message may be transmitted through different paths. Preferably, the cancellation message is transmitted via a direct path, wherein the first AP MLD 10 sends the cancellation message directly to the second AP MLD 20, for example, over a backhaul network. Alternatively, the cancellation message is transmitted via an indirect path, wherein the first AP MLD 10 sends the cancellation message to the non-AP MLD 30, which then relays the cancellation message to the second AP MLD 20.

Upon receiving the cancellation message, the processor 20c of the second AP MLD 20 processes the cancellation message and ceases to apply the SN limitation indicated by the aforementioned information. As a result, the transmission window Q3becomes unconstrained by the transmission activity of the first AP MLD 10. The second AP MLD 20 is subsequently permitted to transmit data packets from its transmission queue Q2 independently, thereby resuming normal, unconstrained downlink operation/transmission. The limitation cancellation mechanism ensures a timely and efficient completion of the roaming process.

In addition to the explicit cancellation mechanism shown in FIG.2, the SN limitation may also be terminated implicitly. Preferably, the SN limitation is abandoned automatically by the second AP MLD 20 upon the occurrence of a defined event that signifies the end of the concurrent transmission period. For example, the processor 20c of the second AP MLD 20 may be configured to automatically disregard the SN limitation when the roaming process is fully completed. Alternatively, the processor 20c may automatically abandon the SN limitation when it detects that there are no longer any active communication links between the non-AP MLD 30 and the first AP MLD 10. This automatic abandonment enables a robust fail-safe function, ensuring that the second AP MLD 20 does not remain unnecessarily constrained if an explicit cancellation message is not received.

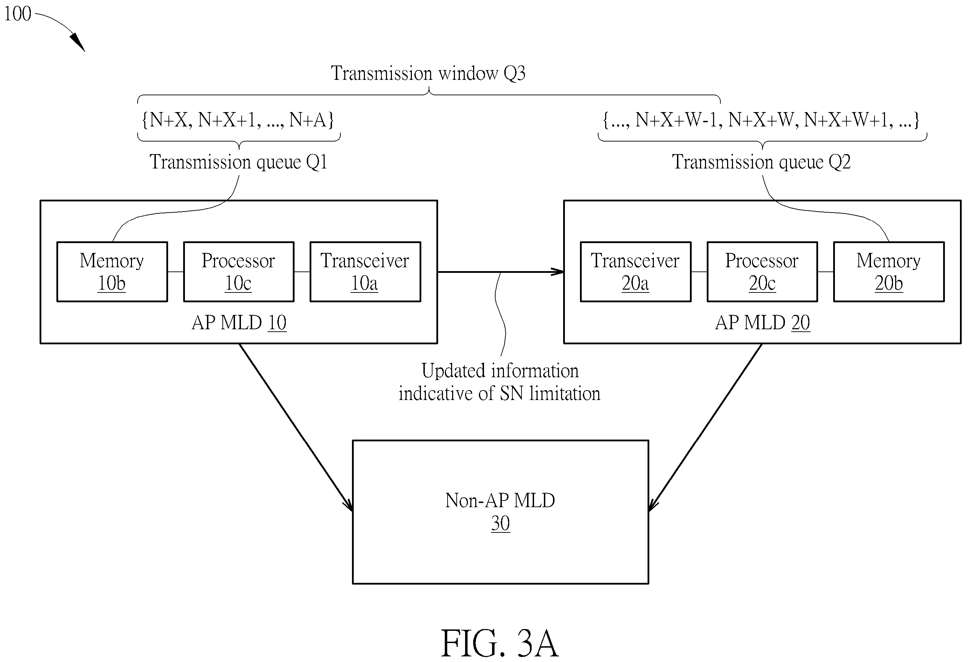

FIG.3A is a schematic diagram illustrating a first stage of a dynamic update mechanism of the wireless communication system 100, which is an exemplary embodiment of the disclosure. The wireless communication system 100 is shown in an operational state subsequent to the initial state shown in FIG. 1, for example, after the first AP MLD 10 has successfully transmitted an initial portion of the older data packets from the transmission queue Q1.

As illustrated in FIG.3A, the state of the transmission queue Q1 in the memory 10b has been updated. The first X data packets (e.g., the MPDUs with SN range from N to N+X-1) have been transmitted, so the starting sequence number (SN) at the head of the transmission queue Q1 is now updated to N+X. The remaining older data packets in the transmission queue Q1 are those with SNs in the range of {N+X, N+X+1, ..., N+A}.

In this exemplary embodiment, the processor 10c of the first AP MLD 10 can be configured to transmit second (updated) information indicative of SN limitation in response to the progress of its own transmission. The second information is configured to cause the second AP MLD 20 to control its downlink transmission based on a second SN limitation value, to ensure that the SNs of the MPDUs sent by the second AP MLD 20 to the non-AP MLD 30 do not exceed the reordering buffer window of the non-AP MLD 30. As shown in FIG.3A, the second SN limitation value (e.g., N+X+W-1) may be defined as an updated starting SN (e.g., N+X) plus a size of the BA window (W, i.e., a window size) minus one. Because X is a positive integer, the second SN limitation value is greater/larger than the first SN limitation value established previously. The processor 10c then controls the transceiver 10a to transmit the second information, which is related to the updated starting SN, to the second AP MLD 20. This updated limitation/information permits the second AP MLD 20 to transmit additional data packets from its transmission queue Q2, thereby preventing the second AP MLD 20 from being unnecessarily paused.

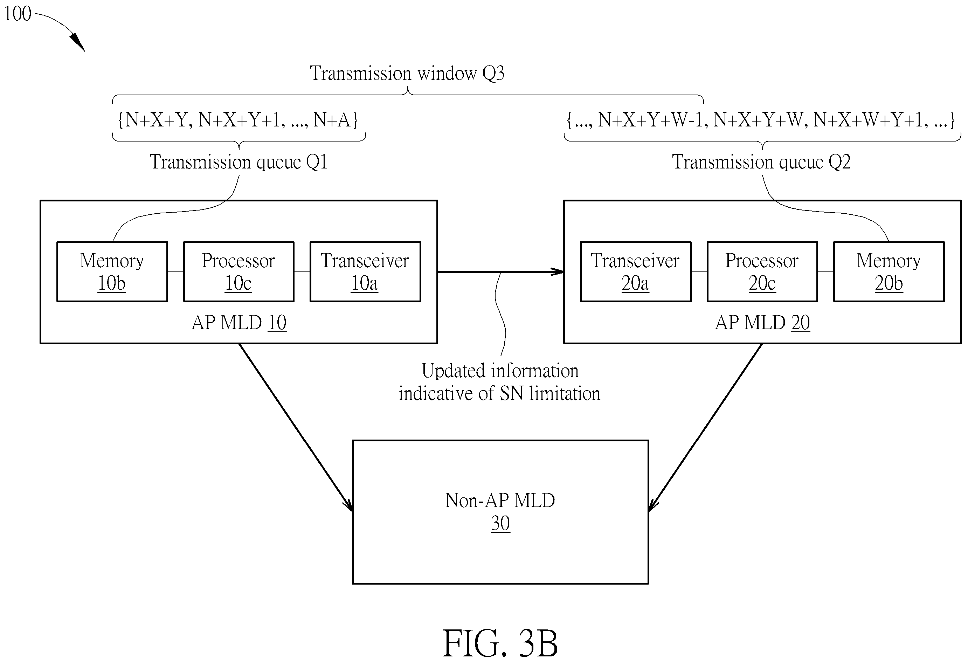

FIG.3B is a schematic diagram illustrating a second, subsequent stage of the dynamic update mechanism of the wireless communication system 100, which can be regarded as another exemplary embodiment of the disclosure. The wireless communication system 100 is shown in an operational state that follows the operational state depicted in FIG.3A, demonstrating the iterative nature of the update process.

As illustrated in FIG.3B, the downlink transmission from the first AP MLD 10 has continued to progress. The transmission queue Q1 has further advanced, indicating that additional Y data packets have been transmitted since the operational state shown in FIG.3A. The starting SN at the head of the transmission queue Q1 is now updated to N+X+Y.

In this exemplary embodiment, the processor 10c of the first AP MLD 10 can be again configured to transmit third (updated) information indicative of SN limitation. As shown in FIG.3B, the updated SN limitation is based on a third SN limitation value, which may be defined as the newly updated starting SN (e.g., N+X+Y) plus the window size (W) minus one (e.g., N+X+Y-1). The processor 10c then controls the transceiver 10a to transmit the third information, which is related to the newly updated starting SN, to the second AP MLD 20. This iterative update process, as shown in FIG.3A and FIG.3B, ensures that spectrum resources are utilized efficiently throughout the roaming transition period by progressively updating the SN limitation.

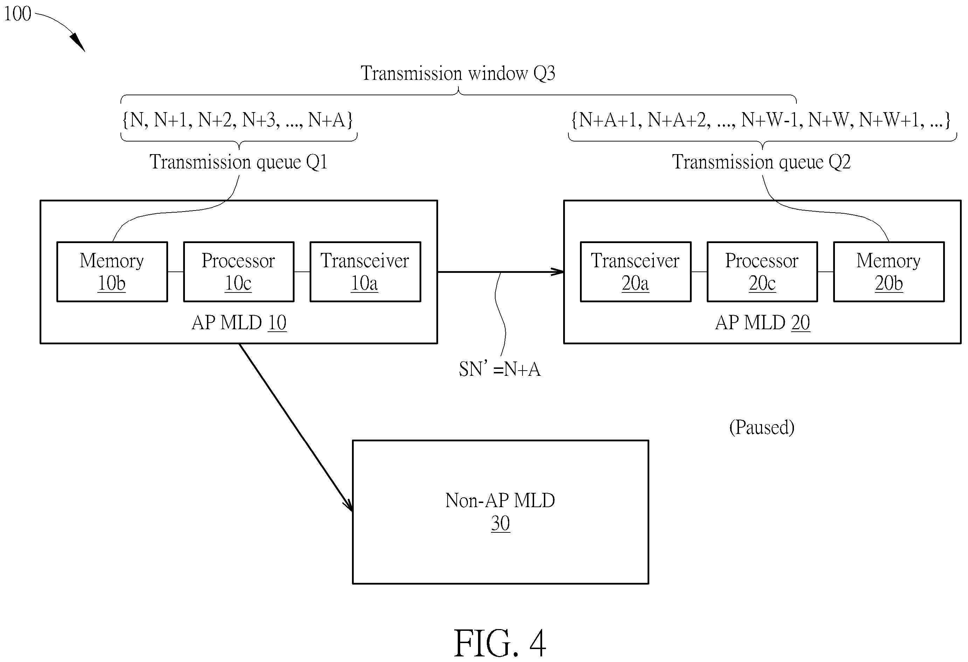

FIG.4 is a schematic diagram illustrating a pause mechanism of the wireless communication system 100, which serves as another exemplary embodiment of the disclosure. FIG.4 depicts an embodiment wherein the first AP MLD 10 establishes a specific SN limitation designed to temporarily pause the downlink transmission of the second AP MLD 20, thereby granting exclusive transmission priority to the first AP MLD 10.

As illustrated in FIG.4, to implement the pause mechanism, the processor 10c of the first AP MLD 10 may be configured to determine a specific SN limitation value SN'. The specific SN limitation value SN' corresponds to the sequence number of the last data packet in the transmission queue Q1 of the first AP MLD 10. For example, as shown in FIG. 4, the specific SN limitation value SN' is equal to N+A, which is smaller than the baseline safe value of N+W-1. The processor 10c then controls the transceiver 10a to transmit specific information indicative of this specific SN limitation value SN' to the second AP MLD 20. For example, the specific information may include the starting SN (e.g., N) and the size of the transmission queue Q1 (e.g., A), and the second AP MLD 20 can derive the specific SN limitation value SN' from the starting SN (e.g., N) and size of the transmission queue Q1 minus one (such as, A). Alternatively, the specific information may comprise the specific SN limitation value SN' (e.g., N+A) itself.

The technical effect of this mechanism is shown by the "Paused" state of the second AP MLD 20. Upon receiving the specific information and acquiring the specific SN limitation value of N+A, because all available SNs (e.g., beginning from N+A+1) in the second AP MLD 20's transmission queue Q2 are greater than the specific SN limitation value (e.g., N+A), the control logic of the processor 20c prevents the transceiver 20a of the second AP MLD 20 from transmitting any data packets. This pause operation mode enables the first AP MLD 10 to clear its transmission queue Q1 of older data packets without contention from the second AP MLD 20.

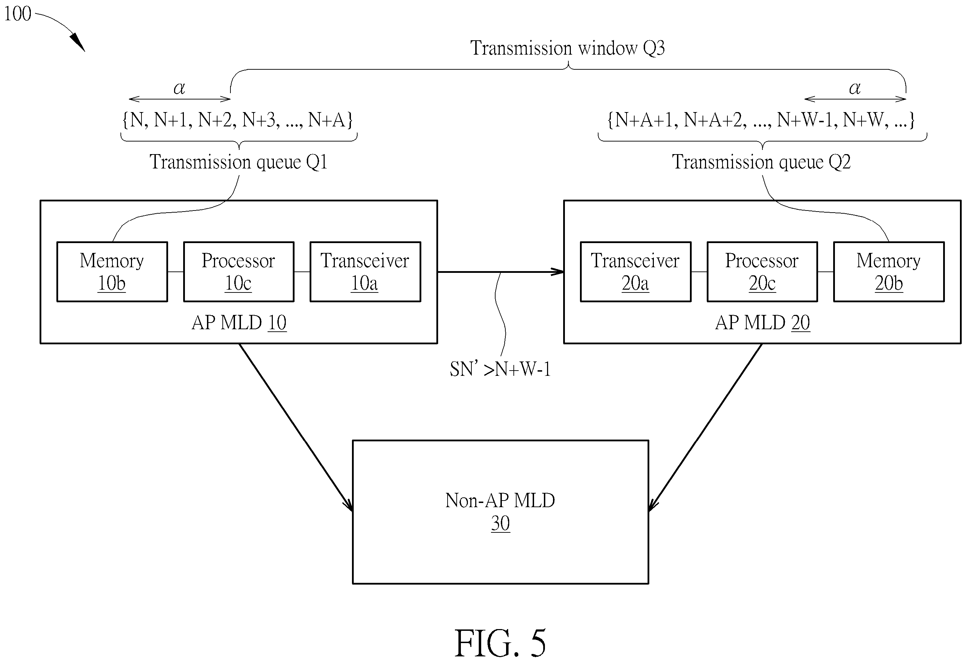

FIG.5 is a schematic diagram illustrating a permissive packet drop mechanism of the wireless communication system 100, which serves as another exemplary embodiment of the disclosure. FIG.5 depicts an embodiment wherein the first AP MLD 10 establishes the permissive packet drop mechanism that prioritizes the timely transmission of newer data packets from the second AP MLD 20, even at the expense of allowing some older data packets from the first AP MLD 10 to be dropped.

As illustrated in FIG.5, to implement this permissive packet drop mechanism, the processor 10c of the first AP MLD 10 is configured to determine a specific SN limitation value, SN', to be greater than the baseline safe value of N+W-1. The processor 10c then controls the transceiver 10a to transmit specific information indicative of this higher SN limitation value to the second AP MLD 20.

The technical effect of this mechanism is a trade-off between latency for new data and reliability for old data. By receiving the higher SN limitation value, the second AP MLD 20 is immediately permitted to transmit newer data packets with SNs greater than N+W-1. The reception of these packets at the non-AP MLD 30 causes the transmission window Q3 to advance prematurely. As visually represented by the symbol α in FIG.5, the advancement causes a few of the oldest data packets from the transmission queue Q1 to fall outside the new, advanced range of the transmission window Q3. Consequently, α number of older packets may be discarded by the non-AP MLD 30. However, in exchange, the second AP MLD 20 is able to transmit α number of newer packets that would have otherwise been paused. This operational mode is particularly useful for latency-sensitive applications where the timely delivery of the most recent data is more critical than ensuring the reception of every older data packet.

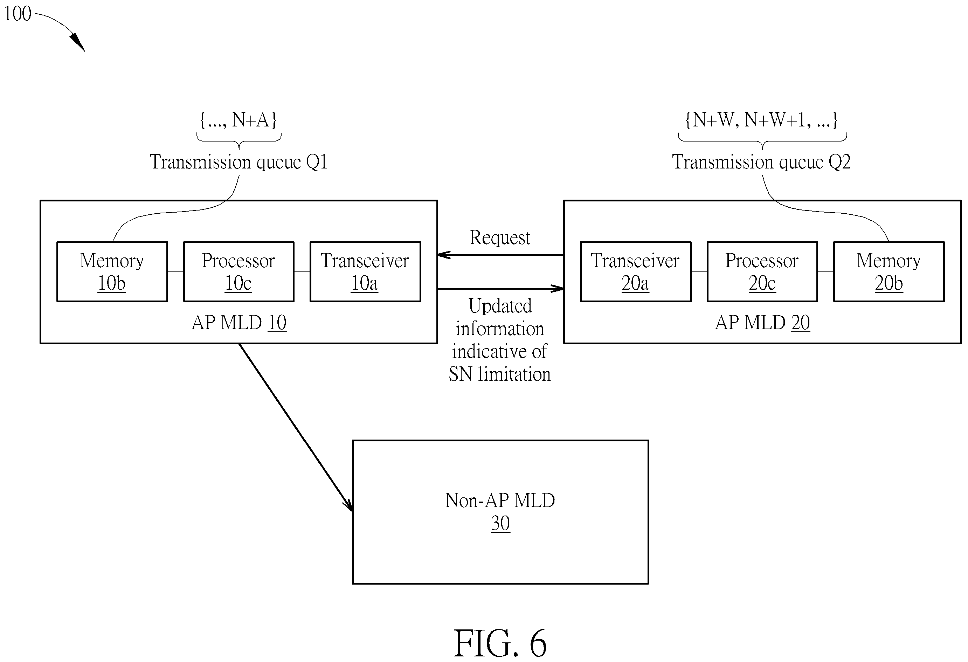

FIG.6 is a schematic diagram illustrating a first scenario of a request mechanism within the wireless communication system 100, which serves as another exemplary embodiment of the disclosure. FIG.6 depicts an embodiment wherein the second AP MLD 20 is configured to proactively request an updated SN limitation from the first AP MLD 10.

As illustrated in FIG.6, this scenario may occur after the second AP MLD 20 has transmitted all data packets that are permitted under the currently active SN limitation. For example, if the initial SN limitation value was N+W-1, the second AP MLD 20 has transmitted all packets up to this SN. The next available data packet in the transmission queue Q2 of the second AP MLD 20 has an SN of N+W, which exceeds the current SN limitation, causing the second AP MLD 20 to pause its transmission.

In this embodiment, instead of waiting passively, the processor 20c of the second AP MLD 20 is configured to generate a request message. The processor 20c then controls the transceiver 20a to transmit the request message to the first AP MLD 10. The request message is used to request a new, higher SN limitation value from the first AP MLD 10. In response to receiving the request message, the processor 10c of the first AP MLD 10 may determine and transmit second information indicative of updated SN limitation back to the second AP MLD 20, enabling the second AP MLD 20 to resume its downlink transmission based on the second information. This two-way communication mechanism enables a more adaptive and efficient coordination process.

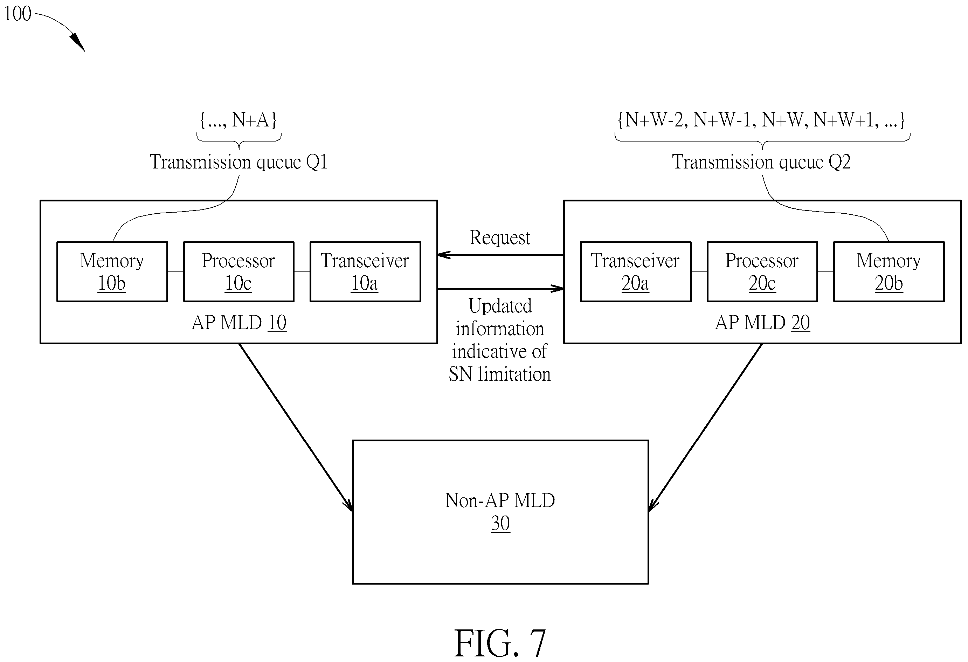

FIG.7 is a schematic diagram illustrating a second scenario of the request mechanism within the wireless communication system 100, which serves as another exemplary embodiment of the disclosure. FIG.7 depicts an embodiment, similar to that shown in FIG.6, wherein the second AP MLD 20 proactively requests an updated SN limitation. However, FIG.7 illustrates a more anticipatory trigger for the request.

As illustrated in FIG.7, the request mechanism may be initiated even when the second AP MLD 20 still has some permitted data packets available for transmission in its transmission queue Q2. The transmission queue Q2 is shown to include data packets with SNs such as N+W-2 and N+W-1, both of which are less than or equal to an initial SN limitation value of N+W-1. In this scenario, the processor 20c of the second AP MLD 20 is configured to transmit the request message before the transmission queue Q2 is fully exhausted of all permitted data packets. The anticipatory request may be triggered based on several conditions. For example, the request may be transmitted when the number of remaining permitted data packets is below a certain threshold, indicating that the transmission queue Q2 is expected to be exhausted soon. Alternatively, the trigger may be based on Quality of Service (QoS) criteria. For example, if a data packet with a strict latency requirement is approaching its transmission deadline but is blocked by other packets ahead of it in the queue, the processor 20c may transmit the request to obtain a higher SN limitation value in advance. The mechanism ensures that time-sensitive data can be transmitted without delay once the preceding packets are sent, thereby improving support for latency-sensitive applications.

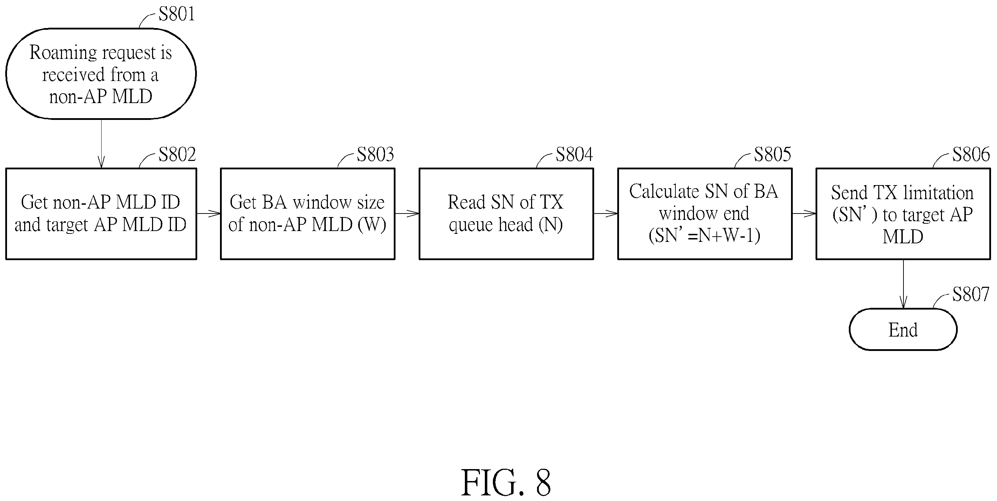

FIG.8 is a flowchart illustrating a method for establishing a transmission limitation performed by the first AP MLD 10 of the wireless communication system 100, and serves as an exemplary embodiment of the disclosure. The method provides a detailed, step-by-step process for initiating the SN limitation.

The method begins at step S801, where a roaming request is received from the non-AP MLD 30 via the transceiver 10a. At step S802, the processor 10c of the first AP MLD 10 processes the roaming request to get the identifier (ID) of the non-AP MLD 30 and the ID of a target AP MLD (e.g., the second AP MLD 20). Next, the processor 10c gathers necessary parameters. At step S803, the processor 10c gets the Block Acknowledgement (BA) window size, W, of the non-AP MLD 30. At step S804, the processor 10c reads the starting SN (for example, the starting SN=N) from the head of the transmission queue Q1 stored in the memory 10b.

With the parameters N and W acquired, the method proceeds to step S805, where the processor 10c may calculate a SN limitation value, SN', according to a safe mechanism, for example, SN' = N + W - 1. Specifically, other SN limitation embodiments can also be adopted. The calculation is performed to define an SN upper bound for the second AP MLD 20 that ensures the reorder buffer window at the non-AP MLD 30 can accommodate all SNs from the starting SN N up to the SN upper bound N+W-1. The mechanism guarantees that the oldest packet with the starting SN of N remains within the valid range of the transmission window.

Finally, at step S806, the processor 10c controls the transceiver 10a to transmit information indicative of the SN limitation (for example, the information may comprise the calculated SN limitation value SN' or the starting SN or other SN limitation value) to the target AP MLD (e.g., the second AP MLD 20). The information transmission may be part of a context transfer between the two AP MLDs. The process then ends at step S807.

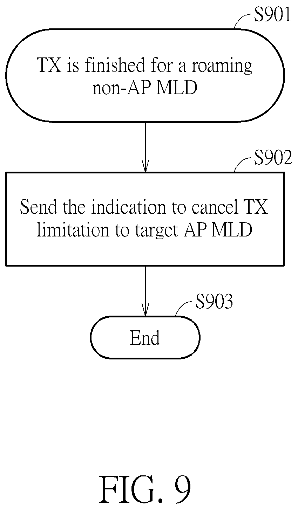

FIG.9 is a flowchart illustrating a method for canceling a transmission (TX) limitation (i.e., the SN limitation) performed by the first AP MLD of the wireless communication system 100. The method provides a detailed, step-by-step embodiment of the process by which the first AP MLD 10 terminates the SN limitation previously established. The method begins at step S901, where a trigger condition is met, indicating that the transmission from the first AP MLD 10 to the non-AP MLD 30 is finished. This condition may be satisfied, for example, when the processor 10c determines that the transmission queue Q1 in the memory 10b is empty, meaning all data packets have been transmitted or dropped.

In response to the trigger condition, the method proceeds to step S902, which is the action of the cancellation process. At step S902, the processor 10c of the first AP MLD 10 controls the transceiver 10a to send a cancellation message to the target AP MLD (the second AP MLD 20) through the direct path or the indirect path. The purpose of the cancellation message is to explicitly terminate the TX limitation (i.e., the SN limitation) and release the second AP MLD 20 from its transmission constraints, thus, the second AP MLD 20 transmits subsequent MPDUs to the non-AP MLD 30 independently. The process then ends at step S903.

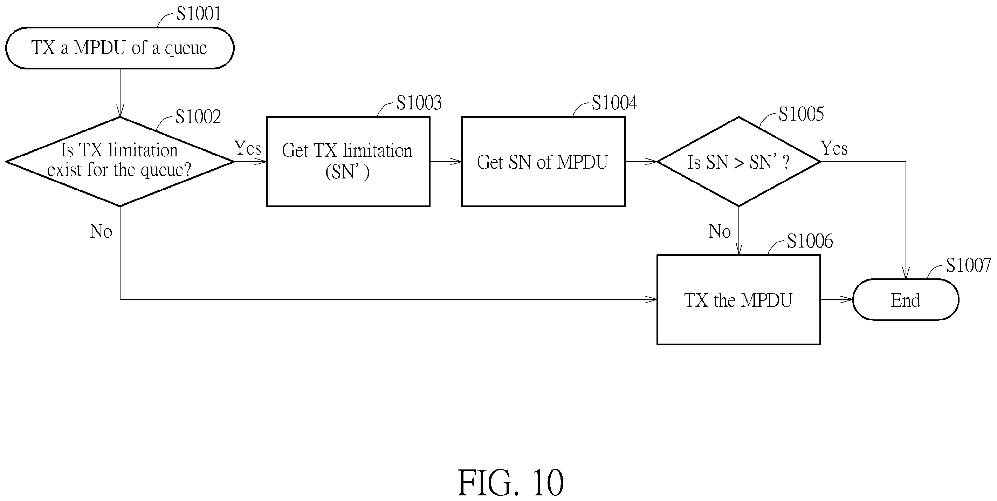

FIG. 10 is a flowchart illustrating a method for controlling downlink transmission based on a received information indicative of SN limitation performed by a second AP MLD (the second AP MLD 20), and serves as an exemplary embodiment of the disclosure. The method provides a detailed, step-by-step process of the control logic executed by the second AP MLD 20 for each data packet considered for transmission during the roaming process.

The method is performed by the processor 20c of the second AP MLD 20 and begins at step S1001 each time a data packet, such as a MAC Protocol Data Unit (MPDU), is to be transmitted from the transmission queue Q2. At step S1002, the processor 20c first determines if TX limitation (i.e., the SN limitation) currently exists for the transmission queue Q2. If no limitation is active, the method proceeds directly to step S1006 for normal downlink transmission.

If TX limitation (i.e., the SN limitation) is determined to be active at step S1002, the processor 20c proceeds with the control logic. At step S1003, the processor 20c acquires the currently active SN limitation value, SN'. At step S1004, the processor 20c gets the specific SN of the MPDU that is being considered for transmission.

At step S1005, the processor 20c performs the core comparison of the control logic by determining if the MPDU's SN is greater than the acquired SN limitation value, SN'. If the result of the comparison at step S1005 is no (i.e., the MPDU's SN is less than or equal to SN'), the MPDU is deemed eligible for transmission. The method then proceeds to step S1006, where the processor 20c controls the transceiver 20a to transmit the MPDU to the non-AP MLD 30. However, if the result of the comparison at step S1005 is yes (i.e., the MPDU's SN is greater than SN'), the MPDU is deemed ineligible. In this case, the transmission of this MPDU is foregone, and the process for this MPDU ends at step S1007. This logic ensures that the second AP MLD 20 strictly adheres to the SN limitation established by the first AP MLD 10, thereby ensuring that transmitted MPDUs are within the BA window or within the reordering buffer window of the non-AP MLD 30.

In another embodiment, the processor 20c of the second AP MLD 20 may be configured to implement a transmit-and-drop mechanism to manage its transmission queue Q2. According to this mechanism, after the processor 20c controls the transceiver 20a to transmit all eligible data packets (i.e., those with SNs less than or equal to the SN' value), the processor 20c may then identify any remaining data packets in the transmission queue Q2 as ineligible. Instead of pausing and continuing to buffer these ineligible packets, the processor 20c may proceed to drop or purge the ineligible data packets from the memory 20b. This operational mode may be useful for managing buffer resources or for applications where transmitting stale data after a potentially long pause is undesirable.

In another embodiment, the processor 20c of the second AP MLD 20 may be configured to ignore SN limitation under certain conditions to ensure system robustness. For example, a timer may be initiated when the transmission of the second AP MLD 20 is paused due to the SN limitation. If the processor 20c does not receive an updated SN limitation information or a cancellation message from the first AP MLD 10 before the timer expires, the processor 20c may determine that the first AP MLD 10 is unresponsive or has encountered an error. In response to such a timeout event, the processor 20c may be configured to ignore the previously acquired SN limitation value and proceed to control the transceiver 20a to transmit data packets, even if their SNs exceed the SN limitation value. This fail-safe mechanism prevents the second AP MLD 20 from being indefinitely blocked, thereby avoiding a system stall and ensuring the completion of the data transmission.

It should be understood that the determination of the SN limitation and its corresponding SN limitation value may be performed by different entities within the wireless communication system 100. While the embodiments described in FIG.8 and FIG.9 illustrate a scenario where the SN limitation is established by the first AP MLD 10, and the embodiments in FIG.6 and FIG.7 illustrate a scenario where an update to the SN limitation is triggered by a request from the second AP MLD 20, other implementations are also possible. In another embodiment, the SN limitation value may be determined through a negotiation between the first AP MLD 10 and the second AP MLD 20. For example, the two AP MLDs may exchange messages to agree upon a mutually acceptable SN limitation value that balances the transmission needs of both access points. In yet another embodiment, the SN limitation may be determined based on a set of predefined coordination rules established by the SMD itself. In this case, both the first AP MLD 10 and the second AP MLD 20 would adhere to these centralized rules mandated by the network to ensure consistent and predictable behavior across the entire SMD.

In summary, the embodiments provide a method and apparatus for a dynamic and adaptive transmission window control during a non-AP MLD's roaming process. Unlike conventional systems where uncoordinated transmissions may lead to data loss, the embodiments enable a first AP MLD and a second AP MLD to coordinate downlink transmission based on the SN limitation information. Based on the coordination, the second AP MLD can control its downlink transmission to prevent a transmission window at a client device from advancing prematurely, thereby avoiding the erroneous discarding of older data packets from the first AP MLD. As a result, the embodiments provide a robust and mutually optimized communication mechanism with enhanced reliability and efficiency.

Those skilled in the art will readily observe that numerous modifications and alterations of the device and method may be made while retaining the teachings of the disclosure. Accordingly, the above disclosure should be construed as limited only by the metes and bounds of the appended claims.

## Claims

1. A wireless communication method performed by a first access point multi-link device, in the following also referred to as AP MLD, (10), the method comprising:
performing frame exchanges with a non-access point multi-link device, in the following also referred to as non-AP MLD, (30); and
during a roaming process in which the non-AP MLD (30) transitions from the first AP MLD (10) to a second AP MLD (20), transmitting first information indicative of sequence number, in the following also referred to as SN, limitation to the second AP MLD (20), to limit the second AP MLD (20) from exceeding a reordering buffer window of the non-AP MLD (30) during downlink transmission to the non-AP MLD (30).

2. A first access point multi-link device, in the following also referred to as AP MLD, (10), comprising:
a transceiver (10a); and
a processor (10c) coupled to the transceiver (10a), and configured to:
perform frame exchanges with a non-access point multi-link device, in the following also referred to as non-AP MLD, (30); and
during a roaming process in which the non-AP MLD (30) transitions from the first AP MLD (10) to a second AP MLD (20), transmit first information indicative of sequence number, in the following also referred to as SN, limitation to the second AP MLD (20) via the transceiver (10a), to limit the second AP MLD (20) from exceeding a reordering buffer window of the non-AP MLD (30) during downlink transmission to the non-AP MLD (30).

3. The method of claim 1, wherein the first information is determined based on at least a starting SN of at least one MAC Protocol Data Unit, in the following also referred to as MPDU, in a transmission queue of the first AP MLD; or
the first AP MLD (10) of claim 2, wherein the processor (10c) is further configured to determine the first information based on at least a starting SN of at least one MPDU in a transmission queue of the first AP MLD (10).

4. The method of claim 1 or 3, wherein the first information is determined based on at least a starting SN of a Block Ack, in the following also referred to as BA, window of the first AP MLD; or
the first AP MLD (10) of claim 2 or 3, wherein the processor (10c) is further configured to determine the first information based on at least a starting SN of a BA window of the first AP MLD (10).

5. The method of claim 1, wherein the first information is determined based on a starting SN of at least one MPDU in a transmission queue of the first AP MLD and a window size, and/or wherein the first information is determined based on a starting SN of a BA window of the first AP MLD and the window size; or
the first AP MLD (10) of claim 2, wherein the processor (10c) is further configured to determine the first information based on a starting SN of at least one MPDU in the transmission queue and a window size; and/or wherein the processor is configured to determine the first information based on a starting SN of a BA window of the first AP MLD (10) and the window size.

6. The method of any one of claims 1 and 3 to 5, wherein the first information indicative of the SN limitation is configured to cause the second AP MLD to control the downlink transmission to the non-AP MLD based on a first SN limitation value, to ensure that MPDUs transmitted to the non-AP MLD are within the reordering buffer window, wherein the first SN limitation value is defined as a starting SN plus a window size minus one, and the first information is related to the starting SN; or
the first AP MLD (10) of any one of claims 2 to 5, wherein the processor (10c) is further configured to set the first information to cause the second AP MLD (20) to control the downlink transmission to the non-AP MLD (30) based on a first SN limitation value to ensure that MPDUs transmitted to the non-AP MLD (30) are within the reordering buffer window, wherein the first SN limitation value is defined as a starting SN plus a window size minus one, and the first information is related to the starting SN.

7. The method of claim 6, further comprising:
transmitting second information indicative of SN limitation to the second AP MLD after one or more MPDUs in the transmission queue are transmitted from the first AP MLD to the non-AP MLD or in response to a request for the second AP MLD, to cause the second AP MLD to control the downlink transmission to the non-AP MLD based on a second SN limitation value,
wherein the second SN limitation value is defined as an updated starting SN plus the size of the
reordering buffer window minus one, and the second information is related to the updated starting SN, and the second SN limitation value is larger than the first SN limitation value; or
the first AP MLD (10) of claim 6, wherein the processor (10c) is further configured to:
transmit second information indicative of SN limitation to the second AP MLD (20) via the transceiver (10a) after one or more MPDUs in the transmission queue are transmitted to the non-AP MLD (30) or in response to a request from the second AP MLD (20), to cause the second AP MLD (20) to control the downlink transmission to the non-AP MLD (30) based on a second SN limitation value,
wherein the second SN limitation value is defined as an updated starting SN plus a window size minus one, and the second information is related to the updated starting SN, and the second SN limitation value is larger than the first SN limitation value.

8. The method of any one of claims 1 and 3 to 7, further comprising:
transmitting a cancellation message indicating a cancellation of the SN limitation; or
the first AP MLD (10) of any one of claims 2 to 7, wherein the processor (10c) is further configured to:
transmit a cancellation message indicating a cancellation of the SN limitation via the transceiver (10a).

9. A wireless communication method performed by a second access point multi-link device, in the following also referred to as AP MLD, the method comprising:
receiving first information indicative of sequence number, in the following also referred to as SN, limitation from a first AP MLD during a roaming process in which a non-access point multi-link device, in the following also referred to as non-AP MLD, transitions from the first AP MLD to the second AP MLD; and
controlling downlink transmission to the non-AP MLD based on the first information, to ensure that MAC Protocol Data Units, in the following also referred to as MPDUs, transmitted to the non-AP MLD are within a reordering buffer window of the non-AP MLD.

10. A second access point multi-link device, in the following also referred to as AP MLD, (20), comprising:
a transceiver (20a); and
a processor (20c) coupled to the transceiver (20a), and configured to:
receive first information indicative of sequence number, in the following also referred to as SN, limitation from a first AP MLD (10) via the transceiver (20a) during a roaming process in which a non-access point multi-link device, in the following also referred to as non-AP MLD, (30) transitions from the first AP MLD (10) to the second AP MLD (20); and
control downlink transmission to the non-AP MLD 830) based on the first information, to ensure that MAC Protocol Data Units, in the following also referred to as MPDUs, transmitted to the non-AP MLD (30) are within a reordering buffer window of the non-AP MLD (30).

11. The method of claim 9 or the second AP MLD (20) of claim 10, wherein the first information is determined based on at least a starting SN of at least one MPDU in a transmission queue of the first AP MLD (10); and/or wherein the first information is determined based on at least a starting SN of a Block Ack, in the following also referred to as BA, window of the first AP MLD (10).

12. The method of claim 9 or the second AP MLD (20) of claim 10, wherein the first information is determined based on a starting SN of at least one MPDU in a transmission queue of the first AP MLD and a window size; and/or wherein the first information is determined based on a starting SN of a BA window of the first AP MLD (10) and the window size.

13. The method of any one of claims 9, 11, and 12, wherein controlling the downlink transmission to the non-AP MLD based on the first information comprises:
controlling the downlink transmission to the non-AP MLD based on a first SN limitation value, to ensure that the MPDUs transmitted to the non-AP MLD do not exceed the first SN limitation value,
wherein the first SN limitation value is defined as a starting SN plus a window size minus one, and the first information is related to the starting SN; or
the second AP MLD (20) of any one of claims 10 to 12, wherein the processor (20c) is further configured to control the downlink transmission by controlling the downlink transmission to the non-AP MLD (30) based on a first SN limitation value, to ensure that the MPDUs transmitted to the non-AP MLD (30) do not exceed the first SN limitation value, and wherein the first SN limitation value is defined as a starting SN plus a window size minus one, and the first information is related to the starting SN.

14. The method of any one of claims 9 and 11 to 13, further comprising:
receiving second information indicative of SN limitation, wherein the second information is different from the first information, and
controlling the downlink transmission to the non-AP MLD based on the second information; or
the second AP MLD (20) of any one of claims 10 to 13, wherein the processor (20c) is further configured to:
receive second information indicative of SN limitation, wherein the second information is different from the first information, and
control the downlink transmission to the non-AP MLD (30) based on the second information.

15. The method of any one of claims 9 and 11 to 14, further comprising:
receiving a cancellation message indicating a cancellation of the SN limitation, and
in response to receiving the cancellation message, transmitting subsequent MPDUs to the non-AP MLD independently without being limited by the first information or the first AP MLD; or
the second AP MLD (20) of any one of claims 10 to 14, wherein the processor (20c) is further configured to:
receive, via the transceiver (20a), a cancellation message indicating a cancellation of the SN limitation, and
in response to receiving the cancellation message, transmit subsequent MPDUs to the non-AP MLD (30) independently without being limited by the first information or the first AP MLD (10).
